(19) Europäisches Patentamt
European Patent Office
Office européen des brevets

(11) **EP 4 687 102 A1**

(12) **EUROPEAN PATENT APPLICATION**

(43) Date of publication:
**04.02.2026 Bulletin 2026/06**

(21) Application number: **24191973.7**

(22) Date of filing: **31.07.2024**

(51) International Patent Classification (IPC):
**G06T 7/55** (2017.01)

(52) Cooperative Patent Classification (CPC):
**G06T 7/55;** G06T 2207/30221

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Koninklijke Philips N.V.**
**5656 AG Eindhoven (NL)**

(72) Inventor: **VAREKAMP, Christiaan**
**5656 AG Eindhoven (NL)**

(74) Representative: **Philips Intellectual Property & Standards**
**High Tech Campus 52**
**5656 AG Eindhoven (NL)**

(54) **METHOD AND SYSTEM FOR DEPTH ESTIMATION**

(57) A system and method for depth estimation. 2D images are acquired by cameras that are divided into at least two sets according to focal length. Images acquired by one of the sets of cameras are processed to generate semantic information, which is in turn processed to generate a depth map for each image acquired by another set of cameras.

FIG. 4

**Description**

FIELD OF THE INVENTION

The invention relates to the field of depth estimation.

BACKGROUND OF THE INVENTION

The focal length for cameras in a multi-camera system for volumetric video capture is typically selected to achieve a balance between providing sufficient overlap between views for depth estimation and imaging objects with sufficient resolution.

In many applications, it is desirable to capture distant objects at high resolution. For instance, sports players may be imaged at a distance of 30-50 m. However, a multi-camera system with a large focal length will typically lack sufficient overlap between views for successful depth estimation.

There is therefore a need for an improved method for depth estimation.

SUMMARY OF THE INVENTION

The invention is defined by the claims.

According to examples in accordance with an aspect of the invention, there is provided a method for depth estimation, the method comprising: obtaining a first set of 2D images of a scene, wherein each 2D image in the first set of 2D images is acquired by a camera belonging to a first set of cameras; obtaining a second set of 2D images of a scene, wherein each 2D image in the second set of 2D images is acquired by a camera belonging to a second set of cameras, wherein the first and second sets of cameras are defined based on focal length; processing the first set of 2D images to generate semantic information for each 2D image in the first set of 2D images; and for each 2D image in the second set of 2D images, processing the semantic information for one or more of the 2D images in the first set to generate a depth map for the 2D image in the second set of 2D images.

The inventor has recognized that the quality of semantic information used for depth estimation depends on the focal lengths of the cameras used to acquire the images for which depth is being estimated, and that an accuracy of depth information may therefore be improved by basing the depth estimation on semantic information extracted from images of the same scene acquired at a focal length better suited to the extraction of the semantic information.

In some examples, the depth map for each 2D image in the second set of 2D images is generated by warping, to the viewpoint of the camera in the second set of cameras that acquired the 2D image, the semantic information for one or more of the 2D images in the first set of 2D images.

In some examples, the semantic information for each 2D image in the first set of 2D images comprises a depth map for each 2D image in the first set of 2D images.

In some examples, the semantic information for each 2D image in the first set of 2D images comprises a background geometry model for the scene and/or a segmentation map for each 2D image in the first set of 2D images.

A segmentation map for each 2D image in the first set of 2D images may be generated by processing each 2D image in the first set using a segmentation algorithm.

In some examples, the semantic information for each 2D image in the first set of 2D images comprises calibration information for the first set of cameras.

Calibration information for the first set of cameras comprises a relative pose for each camera in the first set.

In some examples, an average focal length for the second set of cameras is greater than the average focal length for the first set of cameras.

The inventor has recognized that semantic information from a set of images of a scene acquired by cameras having (on average) shorter focal lengths may be used to improve an accuracy of depth estimation for images of the same scene acquired by cameras having (on average) longer focal lengths. In this way, volumetric video data that has both robust and accurate depth information and high resolution for distant objects may be obtained.

In some examples, an average focal length for the second set of cameras is less than the average focal length for the first set of cameras.

The inventor has further recognized that semantic information from a set of images of a scene acquired by cameras having (on average) longer focal lengths may be used to improve an accuracy of depth estimation for images of the same scene acquired by cameras having (on average) shorter focal lengths.

For instance, object instance segmentation for distant objects in the scene will typically provide more reliable results when used on images acquired with longer focal lengths. This more reliable segmentation information may then be applied to images of the same scene acquired with shorter focal lengths.

In some examples, the method further comprises: processing the second set of 2D images to generate semantic information for each 2D image in the second set of 2D images; and for each 2D image in the first set of 2D images, processing the semantic information for one or more of the 2D images in the second set to generate a depth map for the 2D image in the first set of 2D images.

In other words, semantic information for the first set of images is used to improve an accuracy of depth maps for the second set of images, and semantic information for the second set of images is used to improve an accuracy of depth maps for the first set of images.

In some examples, the depth map for each 2D image in the second set of 2D images is generated by, for each 2D image in the second set of 2D images: processing the semantic information for one or more of the 2D images in the first set of 2D images to generate an initial depth map for the 2D image in the second set of 2D images; and processing the initial depth map for the 2D image in the second set of 2D images using a cost function to generate a final depth map for the 2D image in the second set of 2D images.

In some examples, the cost function comprises: a first cost term defining a match cost relative to the first set of 2D images; and a second cost term defining a match cost relative to the second set of 2D images.

In this way, matching between images in the second set may be weighted differently to matching images in the second set with images in the first set.

In some examples, the first cost term measures a minimum difference in color between a pixel in the 2D image in the second set of 2D images and a corresponding pixel in each of a plurality of 2D images in the first set of 2D images.

In some examples, the second cost term measures a minimum difference in color between a pixel in the 2D image in the second set of 2D images and a corresponding pixel in each of a plurality of other 2D images in the second set of 2D images.

There is also proposed a computer program product comprising computer program code means which, when executed on a computing device having a processing system, cause the processing system to perform all of the steps of any method described above.

According to examples in accordance with an aspect of the invention, there is provided a processing system for depth estimation, the processing system being configured to: obtain a first set of 2D images of a scene, wherein each 2D image in the first set of 2D images is acquired by a camera belonging to a first set of cameras; obtain a second set of 2D images of a scene, wherein each 2D image in the second set of 2D images is acquired by a camera belonging to a second set of cameras, wherein the first and second sets of cameras are defined based on focal length; process the first set of 2D images to generate semantic information for each 2D image in the first set of 2D images; and for each 2D image in the second set of 2D images, process the semantic information for one or more of the 2D images in the first set to generate a depth map for the 2D image in the second set of 2D images.

There is also proposed a system comprising: the processing system described above; a first set of cameras; and a second set of cameras, wherein the first and second sets of cameras are defined based on focal length.

In some examples, the first set of cameras and the second set of cameras are together provided in a plurality of camera units, such that each camera unit comprises a camera from the first set and a camera from the second set.

The camera from the first set in each camera unit may have a fixed position with respect to the camera from the second set in the same camera unit.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 illustrates a plurality of cameras with short focal lengths imaging a scene;
Fig. 2 illustrates a plurality of cameras with long focal lengths imaging the same scene;
Fig. 3 illustrates a system, according to an embodiment of the invention;
Fig. 4 illustrates an example workflow that may be used by the processing system of the system of Fig. 3 to process the first and second sets of 2D images;
Fig. 5 illustrates a method for depth estimation, according to an embodiment of the invention; and
Fig. 6 illustrates another method for depth estimation, according to an embodiment of the invention.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a system and method for depth estimation. 2D images are acquired by cameras that are divided into at least two sets according to focal length. Images acquired by one of the sets of cameras are processed to generate semantic information, which is in turn processed to generate a depth map for each image acquired by another set of cameras.

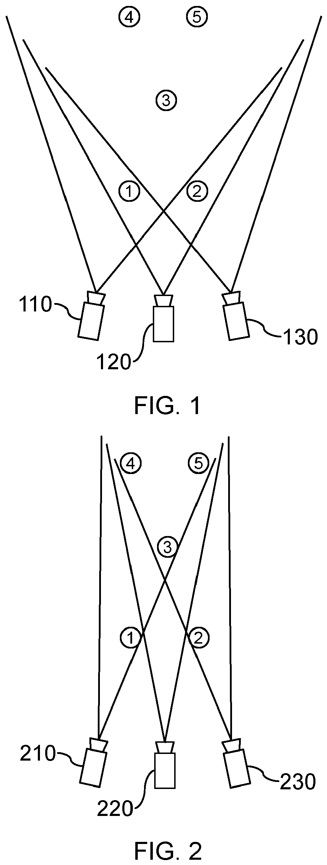

Figs. 1 and 2 illustrate the respective difficulties of using cameras with short and long focal lengths to image a large scene.

Fig. 1 illustrates cameras 110, 120 and 130 imaging a scene containing objects 1, 2, 3, 4 and 5. Cameras 110, 120 and 130 each have a short focal length (and therefore a wide field of view). Objects 1, 2, 4 and 5 are each visible to at least two cameras, meaning that depth estimation may be performed for these objects on images acquired by cameras 110, 120 and 130, by identifying correspondences between views. Object 3 is occluded by object 1 from the viewpoint of camera 110 and by object 2 from the viewpoint of camera 130, and is therefore only visible to camera 120. It is therefore not possible to estimate the depth of object 3 from images acquired by the cameras 110, 120 and 130.

While cameras 110, 120 and 130 have a sufficiently wide field of view to enable depth estimation for most objects in the scene (except some occluded objects), the more distant objects 4 and 5 will be imaged at a low (angular) resolution by these cameras. Images acquired by cameras 110, 120 and 130 are therefore not suitable for generating close-up views of objects 4 and 5. Further, the resolution at which objects 4 and 5 are imaged by cameras 110, 120 and 130 may be too low to enable these objects to be detected and segmented reliably by an instance segmentation algorithm. This will in turn affect the reliability of depth estimation techniques that use object instance segmentation to constrain depth estimation.

Fig. 2 illustrates cameras 210, 220 and 230 imaging the same scene. Cameras 210, 220 and 230 each have a long focal length (and therefore a narrow field of view), meaning that the overlap between views is much less than in Fig. 1. Only objects 4 and 5 are visible to at least two of the cameras 210, 220 and 230, and therefore depth estimation can only be performed for objects 4 and 5 using images acquired by cameras 210, 220 and 230. Due to lack of correspondences in other views, depth estimation cannot be performed for large parts of the images acquired by cameras 210, 220 and 230.

Further, while the distant objects 4 and 5 are likely to be reliably identified by performing segmentation on images acquired by cameras 210, 220 and 230, a small part of object 1 is outside the field of view of camera 210 and a small part of object 2 is outside the field of view of camera 230, reducing the likelihood that these objects will be segmented reliably. Segmentation is less reliable for objects that are only partly visible in an image (which is more likely to occur with a narrow field of view).

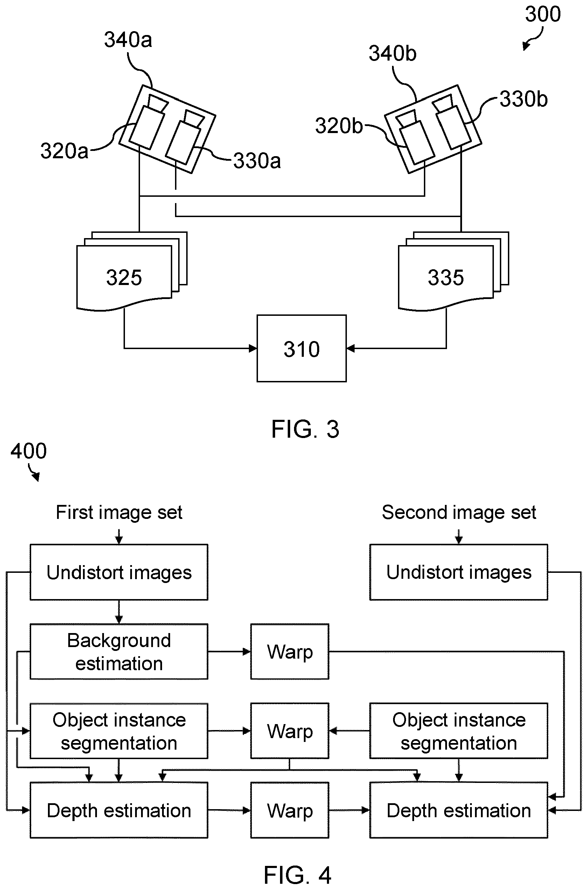

Fig. 3 illustrates a system 300, according to an embodiment of the invention. The system 300 comprises a processing system 310, a first set of cameras 320 and a second set of cameras 330. The processing system 310 is, itself, an embodiment of the invention.

The first and second sets of cameras are defined based on focal length. For instance, an average focal length for the first set of cameras may be different to an average focal length for the second set of cameras, where the average focal length may be, for example, a mean focal length or a median focal length.

In some examples, the average focal length for the first set of cameras may be less than an average focal length for the second set of cameras. In some examples, each camera in the second set may have a greater focal length than any camera in the first set of cameras, but in other examples, one or more cameras in the first set may have a greater focal length than at least one camera in the second set. For instance, the spatial configuration of the cameras in the first set may be such that one or more cameras with a greater focal length would improve depth estimation for the images acquired by the first set of cameras.

In other examples, the average focal length for the first set of cameras may be greater than an average focal length for the second set of cameras. In some examples, each camera in the second set may have a shorter focal length than any camera in the first set of cameras, but in other examples, one or more cameras in the first set may have a shorter focal length than at least one camera in the second set.

In some examples, each camera in the first set may have a same first focal length and each camera in the second set may have a same second focal length. In other examples, cameras in the same set may have different focal lengths to one another. This may, for example, be the case where there are geometric constraints on the positions of the cameras (e.g. where the cameras are placed along a side of a rectangular sports pitch and are focused on a same area of the pitch).

In Fig. 3, there are two cameras 320a and 320b in the first set of cameras 320, and two cameras 330a and 330b in the second set of cameras 330; however, the skilled person will appreciate that a greater number of cameras may be provided in each set (e.g. to provide an increased viewing space and/or to reduce a likelihood of occlusion). The number of cameras in each set may depend on a complexity of the scene and on the application of the depth estimation. In some examples, a different number of cameras may be provided in each set (e.g. the first set may comprise more cameras than the second set). In some examples, one set of cameras (e.g. the set having the longer average focal length) may consist of a single camera, providing images acquired by the other set of cameras enable per-pixel depth information to be estimated for images acquired by the single camera.

Similarly, while Fig. 3 shows two sets of cameras, in some examples, more than two sets of cameras may be used, and the process described below may be extended to a third set, a fourth set, etc. For example, a first set of cameras may have a short average focal length, a second set of cameras may have a medium average focal length, and a third set of cameras may have a long average focal length.

In some examples, more than one system 300 may be used to image the same large scene. For instance, when imaging a soccer game, a first system may be used to image the area around one of the goals on the soccer pitch and a second system may be used to image the area around the other goal. Each of the first and second systems may, for example, comprise two sets of cameras: a first set for wide-angle imaging and a second set for close-ups. For instance, each system may comprise 16 cameras with a focal length of 8 mm and 16 cameras with a focal length of 16 mm, providing 32 cameras in total for each half of the soccer pitch (64 cameras for the entire pitch). In another example, each of the first and second systems may comprise three sets of cameras: a first set for wide-angle imaging, a second set for medium shots and a third set for close-ups. For instance, each system may comprise 16 cameras with a focal length of 8 mm, 16 cameras with a focal length of 12 mm and 16 cameras with a focal length of 16 mm, providing 48 cameras in total for each half of the soccer pitch (96 cameras for the entire pitch).

In Fig. 3, the first set of cameras 320 and the second set of cameras 330 are together provided in a plurality of camera units 340, such that each camera unit comprises a camera from the first set 320 and a camera from the second set 330. Cameras 320a and 330a are provided in a first camera unit 340a, and cameras 320b and 330b are provided in a second camera unit 340b. In other words, each camera from the second set may be providing in a same housing as a camera from the first set, enabling each camera from the second set to be as close as possible to a camera from the first set, as well as enabling the position of each camera from the second set relative to a camera from the first set to be determined easily. In other examples, each camera may be independent from the other cameras in the system (i.e. cameras may not share a housing). Each camera from the first set may be positioned close to (e.g. within a few centimeters of) a camera from the second set to facilitate calibration of the cameras. A maximum distance between each camera in the second set and a closest camera in the first set may depend on the size of the scene being imaged by the cameras and the distance between cameras within the same set.

In some examples, each camera in the first set and each camera in the second set may have a fixed position, a fixed orientation and/or a fixed focal length. In other examples, the camera sets may be dynamic: at least one of the position, the orientation and/or the focal length of each camera may vary. If the focal length of each camera is variable, the camera may belong to the first set of cameras at one point in time and the second set of cameras at another point in time.

The processing system 310 is configured to obtain a first set of 2D images 325 of a scene, each 2D image in the first set having been acquired by a camera belonging to the first set of cameras 320, and a second set of 2D images 335 of the scene, each 2D image in the second set having been acquired by a camera belonging to the second set of cameras 330. In other words, the first set of 2D images comprises 2D images acquired by cameras 320a and 320b, and the second set of 2D images comprises 2D images acquired by cameras 330a and 330b. For illustrative purposes, Fig. 3 shows the processing system obtaining the first set of 2D images and the second set of 2D images directly from the cameras that acquired the respective 2D images; however, as the skilled person will readily appreciate, the processing system may, in some examples, obtain the set of 2D images acquired by the plurality of cameras from another source storing the 2D images (e.g. from a memory unit). In some examples, each 2D image may be a video frame forming part of a video sequence (i.e. each camera may acquire a video sequence), and the procedure described below may be repeated in order to generate depth maps for each video frame.

The processing system 310 is then configured to process the first set of 2D images 325 to generate semantic information for each 2D image in the first set of 2D images. In some examples, the processing system 310 may process each 2D image in the first set to undistort each 2D image (i.e. to remove lens distortion and to shift the principle point) before processing the first set of 2D images to generate the semantic information. Having generated the semantic information for each 2D image in the first set of 2D images, the processing system 110 is configured to generate a depth map for each 2D image in the second set of 2D images by, for each 2D image in the second set, processing the semantic information for one or more of the 2D images in the first set.

The semantic information may be any information relating to the semantic content of the 2D images in the first set, i.e. any information that may be obtained using computer vision techniques. The type of semantic information generated may depend on the depth estimation technique to be used to generate depth maps for the second set of 2D images 335 (i.e. the semantic information may be a type of semantic information used by the depth estimation technique), and on whether the first set of cameras 320 has a longer or shorter average focal length than the second set of cameras 330.

For instance, if the first set of cameras 320 has a shorter average focal length than the second set of cameras 330, the semantic information may comprise a depth map for each 2D image in the first set of 2D images 325. As described above, depth estimation is generally more reliable (robust) when performed on images with shorter focal lengths, as these images tend to have greater overlap and therefore more corresponding points on which depth estimation can be performed. This depth information may then be used to improve the accuracy of depth estimation for the second set of 2D images 335. The depth map for each 2D image in the first set of 2D images may be generated using any suitable depth estimation technique.

If the depth estimation technique used to generate the depth maps for the second set of 2D images 335 involves the use of a background geometry model, the semantic information for the first set of 2D images 325 used to generate the depth maps for the second set of 2D images may additionally or alternatively comprise a background geometry model estimated based on the first set of 2D images. A background geometry model may be estimated by fitting a ground surface plane and one or more background planes to a point cloud for the scene (e.g. a point cloud generated by processing the first set of 2D images using a structure from motion algorithm), from which points corresponding to foreground objects may be identified and removed based on object instance segmentation, or by directly fitting parameters of one or more planar surfaces to the first set of 2D images using image matching. Images with shorter focal lengths have wider fields of view, and therefore capture more of the background of the scene, so may be used to generate a more accurate background geometry model than if a background geometry model based only on the second set of 2D images is used to generate the depth maps for the second set of 2D images.

If the depth estimation technique used to generate the depth maps for the second set of 2D images 335 involves the use of object instance segmentation, the semantic information for the first set of 2D images 325 used to generate the depth maps for the second set of 2D images may additionally or alternatively comprise a segmentation map for each 2D image in the first set of 2D images. As described above, segmentation of objects closer to the cameras is more reliable when performed on images with shorter focal lengths (as these objects are often not entirely within the field of view of cameras with longer focal lengths); therefore, segmentation maps for the first set of 2D images may improve an accuracy of depth estimation for objects in 2D images in the second set that are likely to have unreliable segmentation results in segmentation maps for the second set of 2D images. The segmentation map for each 2D image in the first set of 2D images may be generated by processing the 2D image using any suitable segmentation algorithm, such as an object instance segmentation algorithm and/or a Segment Anything Model (SAM).

If the depth estimation technique used to generate the depth maps for the second set of 2D images 335 involves more traditional techniques that rely on grouping pixels together based on image color or texture, the semantic information may comprise an identification of groups of pixels in each 3D image in the first set, wherein each group of pixels is defined based on image color or texture.

In some examples, the semantic information may additionally or alternatively comprise calibration information for the first set of cameras 320. Cameras with shorter focal lengths can be more reliably calibrated with respect to one another using structure from motion techniques, as they typically have a larger frustum overlap. Providing each camera in the second set 330 is close enough to a camera in the first set to allow the relative pose of each camera in the second set to be determined with respect to a camera in the first set using a structure from motion algorithm, the calibration information for the first set of cameras enables the second set of cameras to be calibrated with respect to one another.

If the first set of cameras 320 has a longer average focal length than the second set of cameras 330, the semantic information may comprise a segmentation map for each 2D image in the first set of 2D images 325. As described above, segmentation of distant objects is more reliable when performed on images with longer focal lengths (as these objects then occupy a greater proportion of the image). If the depth information technique used to generate depth maps for the second set of 2D images 335 uses object segmentation, the segmentation maps for the first set of 2D images may therefore improve the accuracy of depth estimation for the second set of 2D images, as a correct depth may then be determined for more distant objects that might otherwise be assigned a background depth value.

In some examples, the processing system 310 may be further configured to process the second set of 2D images 335 to generate semantic information for each 2D image in the second set of 2D images, and to generate a depth map for each 2D image in the second set of 2D images by, for each 2D image in the second set, processing the semantic information for one or more of the 2D images in the first set. In other words, semantic information for each set of 2D images may be used for the generation of depth maps for the other set of 2D images (or for each other set of 2D images, in examples in which there are more than two sets of 2D images).

For instance, a set of 2D images having a shorter average focal length may be processed to generate first semantic information comprising at least one of: a background geometry model for the scene, a segmentation map for each 2D image in the set and/or a depth map for each 2D image in the set (and/or any other semantic information used for depth estimation), and this first semantic information may be processed to generate a depth map for each 2D image in a set having a longer average focal length, while the set of 2D images having the longer average focal length may be processed to generate second semantic information comprising a segmentation map for each 2D image in the set having the longer average focal length, and this second semantic information may be processed to generate a depth map for each 2D image in the set having the shorter focal length. Where the first semantic information comprises a depth map for each 2D image in the set having the shorter average focal length, these depth maps may be generated based on the second semantic information. In some examples, an iterative process may be performed, in which first semantic information is generated based on a set of 2D images having a shorter average focal length, then the first semantic information and another set of 2D images having a longer average focal length are processed to generate second semantic information, and the second semantic information is then used to refine the first semantic information. The refined first semantic information may then be used to refine the second semantic information, and so on, for a predetermined number of iterations or until a predefined condition is met.

In some examples, the depth map for each 2D image in the second set of 2D images 335 may be generated by, for each 2D image in the second set, warping the semantic information for one or more of the 2D images in the first set of 2D images 325 to the viewpoint of the camera in the second set of cameras 330 that acquired the 2D image. Similarly, in examples in which semantic information for the second set of 2D images is used to generate depth maps for the first set of images, the semantic information for one or more of the 2D images in the second set of 2D images may be warped to the viewpoint of each camera in the first set of cameras 320 to generate the depth map for the 2D image acquired by the camera.

Which semantic information is warped to the viewpoint of each camera, and how the semantic information is warped, may depend on the relative positions of the cameras. For instance, for each 2D image in the second set 335, semantic information for the 2D image acquired by the camera in the first set 320 that is closest to the respective camera in the second set 330 may be warped to the viewpoint of the respective camera in the second set. In some examples (particularly in examples in which cameras in the second set are positioned independently from the cameras in the first set rather than being provided in a shared housing), semantic information for the 2D images acquired by the closest two or more cameras in the first set may be warped to the viewpoint of the respective camera in the second set.

In examples in which a camera from the first set 320 and a camera from the second set 330 are together provided in a single camera unit 340, the closest camera will be the camera provided in the same camera unit. For example, in the arrangement shown in Fig. 3, semantic information for the 2D image acquired by camera 320a may be warped to the viewpoint of camera 330a to generate the depth map for the 2D image acquired by camera 330a, while semantic information for the 2D image acquired by camera 320b may be warped to the viewpoint of camera 330b to generate the depth map for the 2D image acquired by camera 330b.

In some examples, particularly examples in which a camera from the first set 320 and a camera from the second set 330 are together provided in a single camera unit 340, the difference in position between each camera from the second set and the closest camera from the first set may be negligible (compared with the focal lengths of the cameras). In these cases, the warping may simply comprise a 3D rotation (if the cameras have different orientations) and a scaling to adjust for the difference in focal length.

In order to warp semantic information for one or more images in the first set to the viewpoint of a camera in the second set, the positions and orientations of the first set of cameras must be known relative to the positions and orientations of the second set of cameras; i.e. the first and second sets of cameras must be mutually calibrated. In some examples, at least some information relating to the relative positions and orientations of the first and second sets of cameras may be input to the processing system 310 (e.g. if all cameras have a fixed position, the relative positions of all cameras may be known in advance, while if a camera from the first set is provided in a same camera unit as a camera from the second set, at least the distance between cameras in the same camera unit may be known in advance). In some examples, the processing system may be configured to determine the relative positions and orientations of the first and second sets of cameras by processing the first and second sets of 2D images using a structure-from-motion algorithm (providing each 2D image has sufficient overlap with at least one other image).

In some examples, the depth map for each 2D image in the second set of 2D images is generated by, for each 2D image in the second set, processing the semantic information (e.g. the warped semantic information) to generate an initial depth map for the 2D image. The generation of the initial depth map will depend on the content of the warped semantic information. For instance, where the warped semantic information comprises a warped depth map for an image in the first set, the warped depth map may be used as the initial depth map. If further warped semantic information (e.g. a warped background geometry model and/or a warped segmentation map for the image in the first set) is available, this further semantic information may be used to condition the warped depth map (e.g. to reduce a likelihood of a foreground object being misinterpreted as background and/or vice versa in the warped depth map). If the warped semantic information does not comprise any depth maps, the warped semantic information may be processed with the second set of 2D images to generate the initial depth map for each 2D image (e.g. a warped background model and/or warped segmentation maps may be processed with the second set of 2D images to generate the initial depth maps).

The initial depth map for each 2D image in the second set may then be processed using a cost function to generate a final depth map for the 2D image. In other examples, the initial depth map for each 2D image in the second set (i.e. based only on the semantic information for the first set) may provide depth maps of sufficient accuracy.

The generation of the final depth map for each 2D image in the second set may comprise, for each pixel in each 2D image, using a cost function to determine a cost for each of a plurality of candidate depths, and selecting the candidate depth with the lowest cost as the depth for the pixel. The plurality of candidate depths may be defined based on the depth value for the pixel in the initial depth map; for instance, the depth value in the initial depth map may be the first candidate depth for the pixel, and further candidate depths may be determined by adjusting the most recent candidate depth in an iterative fashion (e.g. by selecting a neighboring value or a pseudo-random update).

In some examples, the cost function may comprise a first cost term defining a match cost relative to the first set of 2D images, and a second cost term defining a match cost relative to the second set of 2D images, allowing different weights to be applied to each match cost.

For instance, where the first set of cameras has a shorter average focal length, the cost function may be described by the equation:

$$C_{\text{total}}(\mathbf{p}, z) = C_{\text{long}}(\mathbf{p}, z) + w_{\text{short}} C_{\text{short}}(\mathbf{p}, z) \tag{1}$$

where $C_{\text{total}}(\mathbf{p}, z)$ is the total match cost for pixel $\mathbf{p}$ at candidate depth z, $C_{\text{long}}(\mathbf{p}, z)$ is the match cost relative to the second set of images (i.e. the second cost term), $C_{\text{short}}(\mathbf{p}, z)$ is the match cost relative to the first set of images (i.e. the first cost term), and $w_{\text{short}}$ is a weight applied to the match cost relative to the first set of images. Matching between images in the second set is preferable (if there is enough overlap to provide matches), as the images in the second set have higher angular resolution due to the greater focal lengths, resulting in more precise depth estimates. Therefore, a much lower weighting may be applied to the match cost relative to the first set of images. For instance, $w_{\text{short}}$ may have a value much smaller than 1, for instance less than 0.2 (e.g. $w_{\text{short}} = 0.1$). In some examples, the difference in weighting may be defined in the cost terms rather than applied separately.

In some examples, the first cost term may measure a minimum difference in color between a pixel in the 2D image in the second set of 2D images and a corresponding pixel in each of a plurality of 2D images in the first set of 2D images.

For instance, a suitable first cost term may be:

$$C_{\text{short}}(\mathbf{p}, z) \equiv \min_{m}\left(E_{m \neq n}^{(\text{short})}\right) \tag{2}$$

where:

$$E_{m \neq n}^{(\text{short})} \equiv \begin{cases} \left\| \mathbf{I}_n^{(\text{long})}(\mathbf{p}) - \mathbf{I}_{m \neq n}^{(\text{short})}(\mathbf{q}(z)) \right\|_2 & \text{if} & \mathbf{q} \in T \\ \epsilon_{\text{short}} & \text{otherwise} & \end{cases} \tag{3}$$

where $\mathbf{I}_n^{(\text{long})}(\mathbf{p})$ is the color vector of 2D image $n$ in the second set at pixel p and $\mathbf{I}_{m \neq n}^{(\text{short})}(\mathbf{q}(z))$ is the color vector of a 2D image $m$ in the first set at pixel $\mathbf{q}(z)$. The position of pixel $\mathbf{q}(z)$ depends on candidate depth $z$ and on the camera poses (i.e. the position of pixel $\mathbf{q}(z)$ is determined by reprojecting pixel $\mathbf{p}$ to the 2D image in the first set). If the determined position of pixel $\mathbf{q}(z)$ is outside the image domain of the 2D image $m$, the cost term $E_{m \neq n}^{(\text{short})}$ for image $m$ may be set to a small value (e.g. between a thousandth and a tenth of a dynamic range of the image pixel values, such as between 0.255 and 25.5 in the case of 8-bit images.

In some examples, the second cost term may measure a minimum difference in color between a pixel in the 2D image in the second set of 2D images and a corresponding pixel in each of a plurality of other 2D images in the second set of 2D images.

For instance, a suitable second cost term may be:

$$C_{\text{long}}(\mathbf{p}, z) \equiv \min_{m}\left(E_{m \neq n}^{(\text{long})}\right) \tag{4}$$

where:

$$E_{m \neq n}^{(\text{long})} \equiv \begin{cases} \left\| \mathbf{I}_n^{(\text{long})}(\mathbf{p}) - \mathbf{I}_{m \neq n}^{(\text{long})}(\mathbf{q}(z)) \right\|_2 & \text{if} & \mathbf{q} \in T \\ \epsilon_{\text{long}} & \text{otherwise} & \end{cases} \tag{5}$$

where $\mathbf{I}_n^{(\text{long})}(\mathbf{p})$ is the color vector of 2D image $n$ in the second set at pixel $\mathbf{p}$ and $\mathbf{I}_{m \neq n}^{(\text{long})}(\mathbf{q}(z))$ is the color vector of another 2D image $m$ in the second set at pixel $\mathbf{q}(z)$. Again, the position of pixel $\mathbf{q}(z)$ depends on candidate depth $z$ and on the camera poses, and the cost term $E_{m \neq n}^{(\text{long})}$ for 2D image $m$ may be set to a small value if the determined position of pixel $\mathbf{q}(z)$ is outside the image domain of the 2D image m.

In some examples, rather than selecting only the minimum value for $E_{m \neq n}^{(\text{long})}$, the second cost term may be a sum of the N smallest values for $E_{m \neq n}^{(\text{long})}$, where N is a number less than the total number of other 2D images in the second set. In this way, the largest values for $E_{m \neq n}^{(\text{long})}$ (typically including values that are large due to occlusion) are excluded. If N is greater than 1, this may provide a more precise result than using just the minimum value, by taking into account cameras that are further away.

Other suitable cost terms include spatial cost terms that favor smooth depth variation inside homogeneous color regions, cost terms that favor certain depth candidate values, and cost terms that depend on a per pixel object class label (i.e. using object instance segmentation). For instance, a spatial cost term may determine a cost as a quadratic difference between a center pixel for a region/object or a block depth and one or more neighboring (e.g. 4- or 8-connected) pixels or block depth values, applying a down-weighting for pixel or block pairs having a similar color. Further suitable cost functions will be apparent to the skilled person.

Fig. 4 illustrates an example workflow 400 that may be used by the processing system 310 to process the first and second sets of 2D images. In Fig. 4, the first set of 2D images has a shorter average focal length than the second set of 2D images.

Each 2D image in the first and second sets of 2D images may first be undistorted. The undistorted 2D images in the first set may then be processed to estimate a background geometry model for the scene, and each undistorted 2D image in the first set may be processed using an object instance segmentation algorithm to generate a segmentation map for the 2D image. In some examples, the step of undistorting the images may be preceded by a calibration step, in which the extrinsic parameters of all cameras are determined relative to one another, for example, by processing both sets of images using a structure from motion algorithm. The extrinsic parameters for the cameras in the first set relative to one another may be determined by processing the first set of 2D images using a structure from motion algorithm, and the extrinsic parameters for the cameras in the second set may each be determined relative to one of the cameras in the first set (i.e. the closest camera in the first set) by processing, using a structure from motion algorithm, each 2D image in the second set with a 2D image in the first set acquired by the closest camera in the first set.

The undistorted 2D images in the first set, the background geometry model and the segmentation maps for the first set are then processed to generate a depth map for each 2D image in the first set of 2D images. In some examples, each undistorted image in the second set may also be processed using an object instance segmentation algorithm to generate a segmentation map for the 2D image, and the segmentation maps for the second set may be warped to the viewpoints of the cameras in the first set and used in the generation of the depth maps for the first set of 2D images.

The background geometry model, the segmentation maps for the 2D images in the first set and the depth maps for the 2D images in the first set may be warped to the viewpoints of the cameras in the second set. The warp of the background geometry model may be based on the depth of the geometry model itself, while the warp of the segmentation maps and depth maps may be based on the relevant per-pixel estimated depth map value.

The undistorted 2D images in the second set, the warped background geometry model, the warped segmentation maps and the warped depth maps are then processed to generate depth maps for the second set of 2D images. In some examples, the depth maps for the second set of 2D images may be generated using a cost function, as described above.

In Fig. 4, all three types of semantic information are warped and used to generate the depth maps for the second set of 2D images; however, improvements in depth estimation accuracy may be achieved even by warping only one of these types of information (i.e. by warping only the background geometry model, only the segmentation maps or only the depth maps).

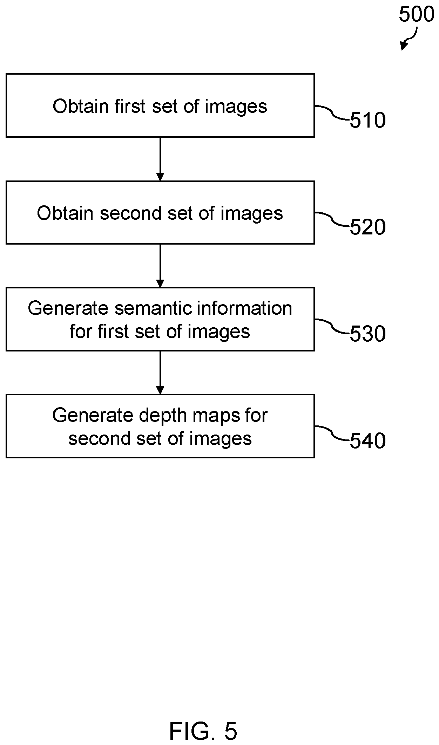

Fig. 5 illustrates a method 500 for depth estimation, according to an embodiment of the invention.

The method 500 begins at step 510, at which a first set of 2D images of a scene is obtained. Each 2D image in the first set of 2D images is acquired by a camera belonging to a first set of cameras.

At step 520, a second set of 2D images of a scene is obtained. Each 2D image in the second set of 2D images is acquired by a camera belonging to a second set of cameras. The first and second sets of cameras are defined based on focal length.

At step 530, the first set of 2D images is processed to generate semantic information for each 2D image in the first set of 2D images.

At step 540, for each 2D image in the second set of 2D images, the semantic information for one or more of the 2D images in the first set is processed to generate a depth map for the 2D image in the second set of 2D images.

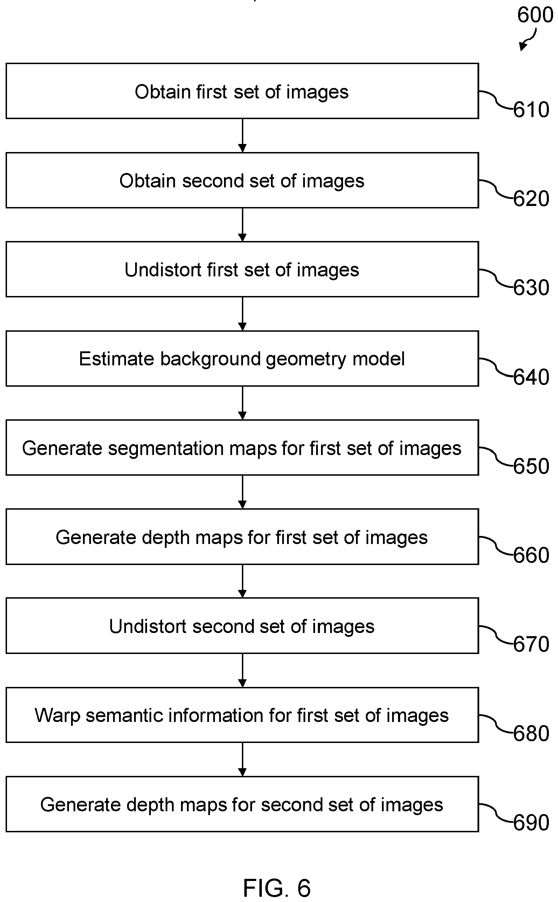

Fig. 6 illustrates a method 600 for depth estimation, according to an embodiment of the invention. The method 600 is a particular implementation of the method 500 described above.

The method 600 beings at step 610, at which a first set of 2D images of a scene is obtained. Each 2D image in the first set of 2D images is acquired by a camera belonging to a first set of cameras.

At step 620, a second set of 2D images of a scene is obtained. Each 2D image in the second set of 2D images is acquired by a camera belonging to a second set of cameras. The first and second sets of cameras are defined based on focal length, such that an average focal length of cameras in the first set is shorter than an average focal length of cameras in the second set.

At step 630, the first set of 2D images is processed to undistort each 2D image in the first set.

At step 640, undistorted 2D images in the first set are processed to estimate a background geometry model for the scene.

At step 650, each undistorted 2D image in the first set is processed using an object instance segmentation algorithm to generate a segmentation map for the 2D image.

At step 660, the undistorted 2D images in the first set, the background geometry model and the segmentation map for each 2D image in the first set are processed to generate a depth map for each 2D image in the first set.

At step 670, the second set of 2D images is processed to undistort each image in the second set.

At step 680, semantic information for the first set is warped to the viewpoint of each camera in the second set. For each camera in the second set, the semantic information that is warped to the viewpoint of the camera comprises one or more of: the background geometry model, the segmentation map for one or more 2D images in the first set, and/or the depth map for one or more 2D images in the first set.

At step 690, the undistorted 2D images in the second set and the warped semantic information are processed to generate a depth map for each 2D image in the second set.

In some examples, the method 600 may further comprise a step (not illustrated in Fig. 6) of processing the undistorted second set of images to generate a segmentation map for each 2D image in the second set. In some examples, the segmentation maps for the first set of 2D images may also be used to generate the segmentation maps for the second set of 2D images. The segmentation maps for the second set of 2D images may be used to generate the depth maps for the first set of 2D images (e.g. the step of generating the segmentation maps for the second set of 2D images may be carried out prior to generating the depth maps for the first set of 2D images, or the segmentation maps for the second set of 2D images may be used to refine the generated depth maps for the first set of 2D images).

Any method described herein may be computer-implemented, where computer-implemented means that the steps of said methods are performed by one or more computers and where a computer is defined as a device suitable for processing data. A computer may be suitable for processing data according to prescribed instructions.

It will be understood that, as the disclosed methods may be computer-implemented methods, there is also proposed a concept of a computer program product comprising code means for implementing any described method when said program is run on a processing system.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A method (500, 600) for depth estimation, the method comprising:

    obtaining a first set of 2D images (325) of a scene, wherein each 2D image in the first set of 2D images is acquired by a camera belonging to a first set of cameras (320);
    obtaining a second set of 2D images (335) of a scene, wherein each 2D image in the second set of 2D images is acquired by a camera belonging to a second set of cameras (330), wherein the first and second sets of cameras are defined based on focal length;
    processing the first set of 2D images to generate semantic information for each 2D image in the first set of 2D images; and
    for each 2D image in the second set of 2D images, processing the semantic information for one or more of the 2D images in the first set to generate a depth map for the 2D image in the second set of 2D images.

2. The method (500, 600) of claim 1, wherein the depth map for each 2D image in the second set of 2D images (335) is generated by warping, to the viewpoint of the camera in the second set of cameras that acquired the 2D image, the semantic information for one or more of the 2D images in the first set of 2D images (325).

3. The method (500, 600) of claim 1 or 2, wherein the semantic information for each 2D image in the first set of 2D images (325) comprises a depth map for each 2D image in the first set of 2D images.

4. The method (500, 600) of any of claims 1 to 3, wherein the semantic information for each 2D image in the first set of 2D images (325) comprises a background geometry model for the scene and/or a segmentation map for each 2D image in the first set of 2D images.

5. The method (500, 600) of any of claims 1 to 4, wherein the semantic information for each 2D image in the first set of 2D images (325) comprises calibration information for the first set of cameras.

6. The method (500, 600) of any of claims 1 to 5, wherein an average focal length for the second set of cameras (330) is greater than the average focal length for the first set of cameras (320).

7. The method (500, 600) of any of claims 1 to 5, wherein an average focal length for the second set of cameras (330) is less than the average focal length for the first set of cameras (320).

8. The method (500, 600) of any of claims 1 to 7, further comprising:

    processing the second set of 2D images (335) to generate semantic information for each 2D image in the second set of 2D images; and
    for each 2D image in the first set of 2D images (325), processing the semantic information for one or more of the 2D images in the second set to generate a depth map for the 2D image in the first set of 2D images.

9. The method (500, 600) of any of claims 1 to 8, wherein the depth map for each 2D image in the second set of 2D images (335) is generated by, for each 2D image in the second set of 2D images:

    processing the semantic information for one or more of the 2D images in the first set of 2D images (325) to generate an initial depth map for the 2D image in the second set of 2D images; and

processing the initial depth map for the 2D image in the second set of 2D images using a cost function to generate a final depth map for the 2D image in the second set of 2D images.

10. The method (500, 600) of claim 9, wherein the cost function comprises:

a first cost term defining a match cost relative to the first set of 2D images (325); and
a second cost term defining a match cost relative to the second set of 2D images (335).

11. The method (500, 600) of claim 10, wherein the first cost term measures a minimum difference in color between a pixel in the 2D image in the second set of 2D images (335) and a corresponding pixel in each of a plurality of 2D images in the first set of 2D images (325).

12. The method (500, 600) of claim 10 or 11, wherein the second cost term measures a minimum difference in color between a pixel in the 2D image in the second set of 2D images (335) and a corresponding pixel in each of a plurality of other 2D images in the second set of 2D images.

13. A computer program product comprising computer program code means which, when executed on a computing device having a processing system, cause the processing system to perform all of the steps of the method (500, 600) according to any one of claims 1 to 12.

14. A processing system (310) for depth estimation, the processing system being configured to:

obtain a first set of 2D images (325) of a scene, wherein each 2D image in the first set of 2D images is acquired by a camera belonging to a first set of cameras (320);
obtain a second set of 2D images (335) of a scene, wherein each 2D image in the second set of 2D images is acquired by a camera belonging to a second set of cameras (330), wherein the first and second sets of cameras are defined based on focal length;
process the first set of 2D images to generate semantic information for each 2D image in the first set of 2D images; and
for each 2D image in the second set of 2D images, process the semantic information for one or more of the 2D images in the first set to generate a depth map for the 2D image in the second set of 2D images.

15. A system (300) comprising:

the processing system (310) of claim 14;
a first set of cameras (320); and
a second set of cameras (330), wherein the first and second sets of cameras are defined based on focal length.

16. The system (300) of claim 15, wherein the first set of cameras (320) and the second set of cameras (330) are together provided in a plurality of camera units (340), such that each camera unit comprises a camera from the first set and a camera from the second set.

FIG. 1

FIG. 2

FIG. 3

FIG. 4

500

Obtain first set of images —510

Obtain second set of images —520

Generate semantic information
for first set of images —530

Generate depth maps for
second set of images —540

FIG. 5

600

Obtain first set of images ⌇ 610

Obtain second set of images ⌇ 620

Undistort first set of images ⌇ 630

Estimate background geometry model ⌇ 640

Generate segmentation maps for first set of images ⌇ 650

Generate depth maps for first set of images ⌇ 660

Undistort second set of images ⌇ 670

Warp semantic information for first set of images ⌇ 680

Generate depth maps for second set of images ⌇ 690

FIG. 6

| | Europäisches Patentamt / European Patent Office / Office européen des brevets | **EUROPEAN SEARCH REPORT** | **Application Number** EP 24 19 1973 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 862 934 A (BEIJING ZHUOHE TECH CO LTD) 5 August 2022 (2022-08-05) | 1-4,6-15 | INV. G06T7/55 |
| A | * sections "Technical field", "Summary of the invention" * <br> * page 5 - page 7 * | 5,16 | |
| | ----- | | |
| X | CN 111 343 367 B (TSINGHUA SHENZHEN INT GRADUATE SCHOOL; UNIV TSINGHUA) 8 June 2021 (2021-06-08) <br> * section "Summary of the invention" * <br> * figure 2 * | 1-4,6, 13-16 | |
| | ----- | | |

**TECHNICAL FIELDS SEARCHED (IPC)**

G06T

The present search report has been drawn up for all claims

| Place of search | Date of completion of the search | Examiner |
|---|---|---|
| Munich | 18 December 2024 | Engels, Angela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 687 102 A1**

## ANNEX TO THE EUROPEAN SEARCH REPORT
## ON EUROPEAN PATENT APPLICATION NO.

EP 24 19 1973

18-12-2024

| Patent document cited in search report | | Publication date | Patent family member(s) | Publication date |
|---|---|---|---|---|
| CN 114862934 | A | 05-08-2022 | NONE | |
| CN 111343367 | B | 08-06-2021 | NONE | |

EPO FORM P0459